Europäisches Patentamt

(19) **European Patent Office**

Office européen des brevets

(11) Publication number: **0 166 188**
A2

## (12) EUROPEAN PATENT APPLICATION

(21) Application number: **85106151.5**

(22) Date of filing: **20.05.85**

(51) Int. Cl.⁴: **B 30 B 11/24**, A 01 J 25/00

(30) Priority: **20.06.84  IT 2233884 U**

(43) Date of publication of application: **02.01.86 Bulletin 86/1**

(84) Designated Contracting States: **AT BE CH DE FR GB LI NL SE**

(71) Applicant: **TECNOPROGETTI S.r.l., Via Labriola, 28, I-41100 Modena (IT)**

(72) Inventor: **Muzzarelli, Gabriele, Via Marzabotto 116, I-41199 Modena (IT)**

(74) Representative: **Luksch, Giorgio, Dr.-Ing. et al, Ing. A. Giambrocono & C. S.r.l. Via Rosolino Pilo, 19/b, I-20129 Milano (IT)**

(54) **Single-screw extrusion machine suitable for filling tubular sheaths with products such as plasticised cheeses.**

(57) The extrusion machine, suitable for filling tubular sheaths with products such as soft and plasticised cheeses, has a single screw, and the wall which delimits the chamber in which the screw operates has a cross-section which is toothed along at least part of its axial extension.

- 1 -

SINGLE-SCREW EXTRUSION MACHINE SUITABLE FOR FILLING TUBULAR SHEATHS
WITH PRODUCTS SUCH AS PLASTICISED CHEESES

This invention relates to a screw extrusion machine suitable for filling tubular sheaths with products such as plasticised cheeses. In other words, the invention relates to an extrusion machine which feeds hardenable products such as cheeses of the indicated type into a protective sheath in order to preserve them from contamination.

It is well known to extrude products of the most varied types into a sheath. This is also done by soft cheese producers. As plasticised cheese behaves differently from the other normally extruded products, and as specific extruders for plasticised cheese are not available, those producers who adopt this extrusion method are compelled to use machines which are adapted according to requirements, ie they are not constructed to take account of the behaviour characteristics of cheese during extrusion, with the consequence that the results are not always satisfactory or good, and in any case the adaptation negatively affects the extruder cost.

Cheese, and more exactly plastic curd cheese such as mozzarella for pizzas, has characteristics which make it unsuitable for working in non-specific extruders such as those used for meat and pasta. This is because such extruders can reach pressures which destroy the cheese material being worked, to the extent of its becoming "sandy" due to separation of the contained moisture from the dry residue. To obviate this drawback, every user adopts special arrangements, but always with unsatisfactory results. For example, in the case of double-screw machines, the cheese inside the package is divided into two almost longitudinal parts, and it is impossible to control the regurgitation phenomenon, which is the signal indicating the presence of the excessively high pressure at which the moisture separates with consequent formation of an unacceptable "sandy" product.

The main object of the present invention is to provide an efficient extruder which is specific for plasticised cheeses, and which does not suffer from the aforesaid drawbacks.

This and further objects which will be more apparent from the detailed description given hereinafter are attained by an extrusion machine, characterised essentially by being of the single-screw type, and in that the wall which delimits the chamber in which the screw operates has a cross-section which is toothed along at least part of its axial extension.

Advantageously, said wall is heated thermostatically along at least part of its extension.

The invention will be more apparent from the detailed description given hereinafter by way of example with reference to the accompanying drawing, in which:

Figure 1 is a diagrammatic longitudinal vertical section through the extruder according to the invention; and
Figure 2 is a cross-section on the line II-II of Figure 1.

In the figures, the reference numeral 1 indicates the load-bearing machine frame, which can be constructed of metal section bars welded together. The frame carries a chest 2 designed to contain a mass of water which can be heated by electric resistance heaters 3, and of which the temperature is thermostatically controlled.

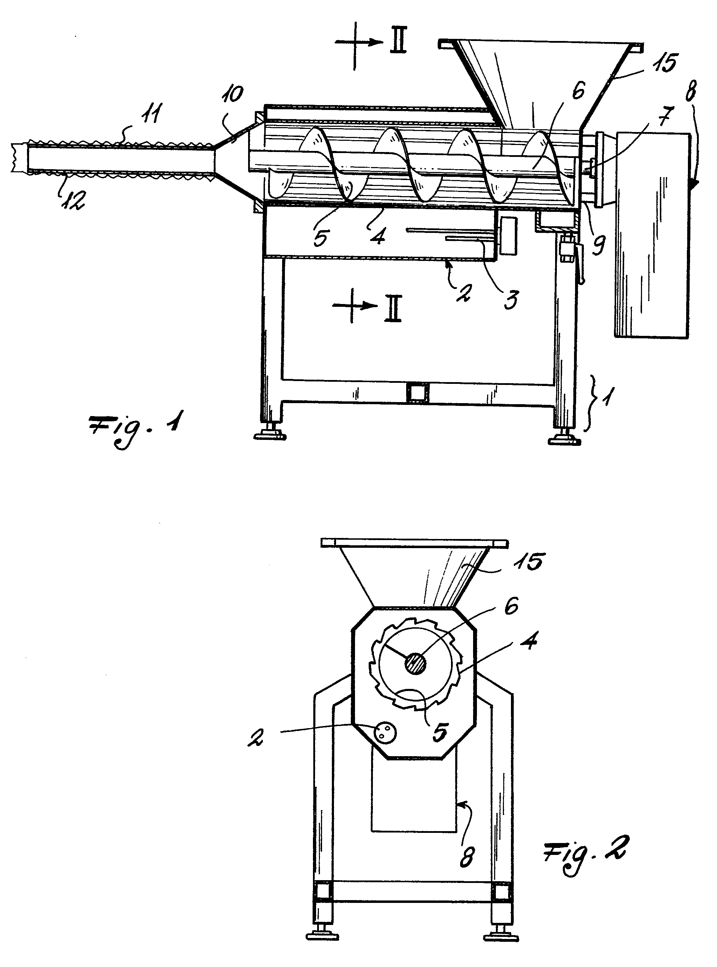

The chest 2 surrounds, and heats by means of its water, a tubular wall 4 which as shown in Figure 2 has a cross-section which is toothed along at least part of its longitudinal extension. Said tubular wall is partially interrupted at its top in a position corresponding with one of its ends, to allow connection to a feed hopper 15.

Within the tubular wall 4 and on the same axis as it there is disposed a screw 5 having a small-diameter shaft 6 which is operationally connected through the closed terminal wall 9 to the output shaft 7 of a variable-speed motor unit 8 supported by the machine frame.

At its other end, the tubular wall 4 is connected to a cone-shaped wall 10 which terminates in a tubular nosepiece 11, on which the protective sheath 12 is disposed and is progressively dragged off by the extruded material leaving the nosepiece 11.

The cheese material to be worked is fed into the hopper 15 and reaches the chamber where the screw 5 operates in order to cause it to advance in opposition to the toothing 4 and to undergo extrusion by the nosepiece 11, from which it leaves and drags with it the sheath 12, which thus covers it.

In order to obtain optimum results, the operator is required to check only the following:
1) that the material descends from the hopper without regurgitation;
2) that the production rate does not undergo reduction due to cavitation phenomena along the screw.

Comparisons made with products obtained using conventional extruders show that those obtained with the machine of the invention, after cooling the package, have a total bacterial load which is decidedly less, together with a practically total absence of thermolabile pathogens such as coli, salmonella etc.

Claims:

1.     An extrusion machine suitable for filling tubular sheaths with products such as soft and plasticised cheeses, characterised by being of the single-screw type, and in that the wall which delimits the chamber in which the screw operates has a cross-section which is toothed along at least part of its axial extension.

2.     A machine as claimed in claim 1, characterised in that said wall is heated thermostatically along at least part of its axial extension.

Fig. 1

Fig. 2